# FASCICULE DE BREVET EUROPEEN

(11) **EP 1 274 786 B1**
(45) Date de publication et mention de la délivrance du brevet: **23.02.2005**
(21) Numéro de dépôt: 01917200.6
(22) Date de dépôt: 21.03.2001
(51) Int. Cl.: C08K 9/02, C08L 77/00

(54) **MATERIAU COMPOSITE A BASE DE POLYAMIDE ET PARTICULES MINERALES SUBMICRONIQUES**
VERBUNDSTOFF AUF DER BASIS VON POLYAMID UND MINERALTEILCHEN IM SUBMIKROMETERBEREICH
COMPOSITE MATERIAL BASED ON POLYAMIDE AND SUBMICRONIC MINERAL PARTICLES

(30) Priorité: 29.03.2000 FR 0003959
(43) Date de publication de la demande: 15.01.2003
(73) Titulaire: Rhodianyl, 92512 Boulogne-Billancourt Cédex (FR)
(72) Inventeur: DUPUIS, Dominique, F-60800 Crepy en Valois (FR); LACOMBE, Patrice, F-69100 Villeurbanne (FR); VARLET, Joel, F-69005 Lyon (FR)
(74) Mandataire: Delenne, Marc
(86) Numéro de dépôt international: PCT/FR2001/000844
(87) Numéro de publication internationale: WO 2001/072889

(56) Documents cités:
- WO-A-94/22962
- FR-A- 1 134 479
- GB-A- 1 222 955
- US-A- 4 705 675

## Description

La présente invention concerne un matériau composite à base de polyamide, comportant des particules minérales submicroniques.

Afin de modifier les propriétés thermomécaniques des polymères, il est connu de leur associer des charges. Il existe pour cela de très nombreuses charges destinées par exemple à modifier la rhéologie des matériaux, la rigidité, la résistance au choc, la ductilité, la stabilité à la lumière, à la chaleur, la résistance au feu, la dureté ... Le choix des charges et des polymères est effectué en fonction de l'application à laquelle le matériau est destiné. A titre d'exemple très général, il est connu de renforcer les résines thermoplastiques par des fibres de verre pour en augmenter la rigidité.

On cherche toujours à développer le nombre de matériaux qui peuvent être proposés et à en améliorer les propriétés. Ainsi de nouvelles charges peuvent être conçues afin, par exemple, de modifier un compromis entre plusieurs propriétés. Une autre voie de développement consiste à rendre compatible une charge avec de nouvelles matrices thermoplastiques, ou à rendre possible leur incorporation dans des matrices thermoplastiques.

Ainsi, le brevet français FR 1 134 479 décrit un matériau composite comprenant une matrice à base de polyamide 6 et une charge siliceuse finement divisée. Le matériau est réalisé par ajout dans le milieu de polymérisation du monomère (caprolactame) d'une dispersion aqueuse de particules de silice. Le matériau présente une rigidité améliorée avec une ductilité préservée ce qui le distingue par exemple d'un matériau renforcé avec des fibres de verre. Ce type de matériau ne peut toutefois pas être réalisé avec une matrice en polyamide 6.6. En effet les dispersions aqueuses de silices ne sont pas stables dans un milieu comportant de l'adipate d'hexaneméthylène d'ammonium. Les particules de silice floculent et il n'est donc pas possible d'obtenir une dispersion de ces particules dans la matrice de polyamide 6.6.

Une première solution, proposée dans le brevet mentionné ci-dessus, consiste à diluer énormément le milieu contenant le sel d'adipate d'hexaneméthylène d'ammonium, également appelé sel N. Cette solution n'est économiquement pas intéressante car elle nécessite l'évaporation d'énormes quantités d'eau. Une autre solution peut consister à utiliser des tensioactifs pour stabiliser la dispersion des particules. Cette solution pose des problèmes de moussage lors de la phase de polymérisation.

La présente invention a pour objectif de proposer une charge , constituée de particules minérales, pouvant être utilisée notamment pour la réalisation de matériaux composites à base de polyamide, et un procédé de préparation de tels matériaux.

A cet effet, un premier objet de l'invention est un matériau composite comportant une matrice à base de polyamide et des particules minérales submicroniques, caractérisé en ce que le polyamide est obtenu par polycondensation d'une diamine avec un acide dicarboxylique, et en ce que les particules comportent un noyau à base de silice et une couche au moins discontinue d'un oxyde, hydroxyde ou oxyde hydraté d'un métal, de point isoélectrique supérieur à celui du noyau.

Un second objet de l'invention est un procédé de préparation d'un matériau composite comportant une matrice polyamide obtenue par polycondensation d'une diamine avec un acide dicarboxylique et des particules minérales submicroniques, caractérisé en ce qu'il comprend les étapes suivantes:
a) Introduction des particules, comportant un noyau et une couche au moins discontinue d'un oxyde, hydroxyde ou oxyde hydraté d'un métal, de point isoélectrique supérieur à celui du noyau, dans une solution aqueuse comprenant un sel de la diamine et de l'acide dicarboxylique.
b) Polycondensation du polyamide jusqu'à un degré de polymérisation désiré.

Le noyau à base de silice des particules submicroniques du premier objet de l'invention est une particule de forme sensiblement sphérique ou plaquettaire. Il peut par exemple être constitué d'une silice plaquettaire.

Les particules du premier objet de l'invention comportent en surface une couche au moins discontinue d'un composé de point isoélectrique supérieur à celui du noyau. Ce composé est de préférence déposé directement sur le noyau. Les particules peuvent toutefois comporter une ou plusieurs autres couches modifiant les propriétés du noyau ou conférant aux particules des propriétés supplémentaires telle qu'une protection UV ou une bio-activité. Le composé de point isoélectrique supérieur à celui du noyau est alors déposé sur la couche intermédiaire externe.

La couche en surface des particules du premier objet de l'invention peut recouvrir la totalité de la surface du noyau ou de la couche intermédiaire externe. Cette couche constitue alors une couche encapsulant le noyau avec éventuellement les couches intermédiaires. La couche en surface peut également ne recouvrir que partiellement la surface du noyau ou des couches intermédiaires. Elle est alors discontinue, c'est le cas notamment lorsqu'une multiplicité de dépôts ponctuels est réalisée à la surface. La forme que revêt la couche en surface dépend généralement des composés utilisés, du procédé de réalisation de la couche, et de la quantité de matière déposée. La couche en surface peut constituer de 1 à 50% en poids de la masse totale de la particule.

A titre d'exemple de composés convenables pour former la couche en surface, on peut citer les hydrates d'alumine, la zircone, la magnésie. Les particules du premier objet de l'invention sont de préférence sensiblement sphériques, le diamètre moyen de ces particules étant inférieur à 500 nm. Le diamètre moyen est de préférence inférieur à 200 nm, plus préférablement encore inférieur à 100 nm.

La couche en surface préférée des particules du premier objet de l'invention est formée par la zircone. Le noyau à base de silice peut par exemple être une particule de silice du type de celles obtenues par la voie dite "Stöber", à partir de silicate d'éthyle, ou par la voie dite "de précipitation", à partir d'un silicate alcalin.

Les particules préférées du premier objet de l'invention sont des particules dont le noyau est à base de silice et dont la couche en surface est une couche discontinue formée par un oxyde, hydroxyde ou oxyde hydraté de zirconium. La proportion en poids du composé du zirconium par rapport au poids total des particules est de préférence compris entre 15 et 25%. Les particules sont de préférence sensiblement sphériques, de diamètre moyen inférieur à 500 nm.

Les particules du premier objet de l'invention sont généralement conditionnées sous forme de sol, par exemple un sol aqueux ou glycolique.

Ces particules peuvent être obtenues selon le procédé suivant:
Etape 1: Dispersion de particules de silice dans un milieu aqueux de force ionique telle que les particules ne floculent pas.
Etape 2: Précipitation d'un sel d'un oxyde de métal ou d'un hydroxyde de métal, le sel étant introduit progressivement dans le milieu de dispersion et le pH du milieu étant régulé de façon à ce que l'oxyde ou l'hydroxyde précipite.
Etape 3: Elimination simultanée ou subséquente des sels solubles résultant de la réaction de précipitation de manière à ce que les particules ne floculent pas. Cette élimination peut par exemple être réalisée par ultrafiltration, électrodialyse ou diafiltration. La limite de conductivité du milieu au delà de laquelle on observe une floculation est d'environ 15 mS.

Dans la première étape, des particules de silice sont dispersées dans un milieu aqueux. La force ionique du milieu de dispersion doit être suffisamment faible pour que les particules ne floculent pas. Le milieu doit, par exemple, être suffisamment dilué. Selon un premier mode de réalisation les particules sont introduites sous forme de poudre, éventuellement avec d'autres composés, dans de l'eau. Selon un deuxième mode de réalisation, les particules sont introduites dans de l'eau sous forme de sol concentré.

La deuxième étape est une étape de précipitation d'un composé modifiant la surface des particules de silice. Le composé est un oxyde métallique obtenu par exemple par précipitation à partir d'un sel d'oxyde de métal ou d'hydroxyde de métal. A titre d'exemple de composés pouvant être utilisés comme précurseurs de l'oxyde métallique, on peut citer l'aluminate de sodium, l'oxychlorure de zirconium, le chlorure de magnésium. Durant cette opération le pH est généralement régulé à des valeurs telles que la réaction de précipitation ait lieu, par exemple par ajout d'un acide ou d'une base. La réaction de précipitation peut en effet générer des sous-produits modifiant le pH du milieu pouvant interrompre de ce fait la réaction de précipitation.

La régulation du pH est généralement effectuée par ajout d'une solution basique ou acide. Elle modifie la force ionique du milieu. Cette modification, lorsqu'elle devient importante, provoque une floculation des particules de silice. Il est donc nécessaire de contrôler la force ionique du milieu par élimination soit continue, soit subséquente des ions introduits dans la solution pour la régulation du pH ou produits lors de l'étape de précipitation.

La force ionique est diminuée par élimination des sels résultant de la réaction de précipitation, par exemple par diafiltration ou ultrafiltration.

Les particules ou des dispersions contenant ces particules décrites ci-dessus sont adaptées pour une utilisation dans des matériaux composites comportant une matrice à base de polyamides obtenus par polycondensation d'une diamine avec un acide dicarboxylique.

Elles peuvent toutefois être utilisées comme charge dans d'autres polymères et plus particulièrement dans d'autres polymères thermoplastiques, par exemple choisis parmi les polyamides, les polyesters, les polymères vinyliques, les polyoléfines, le polyacétal. A titre d'exemples de polyamides pouvant être utilisés on peut citer les produits de polymérisation des lactames ou des aminoacides correspondant aux lactames, par exemple le polyamide 4, le polyamide 6, le polyamide 11, le polyamide 12, les mélanges comportant ces polyamides et les copolymères à base de ces polyamides.

Les matrices en polyamide du premier objet de l'invention sont choisies parmi les produits de condensation d'une ou plusieurs diamines avec un ou plusieurs acides dicarboxyliques. Les diamines sont par exemple choisies parmi les diamines aliphatiques telles que l'hexamethylène diamine, la triméthylhexamethylène diamine, la méthyl-2-pentaméthylène diamine. Les acides dicarboxyliques sont par exemple choisis parmi les acides dicarboxyliques à chaîne aliphatique tels que l'acide adipique, les acides dicarboxyliques aromatiques tels que l'acide téréphtalique, l'acide isophtalique, les acides dicarboxyliques arylaliphatiques, les dimères acides. A titres d'exemples de polyamides préférés on peut citer le polyamide 6.6, le polyamide 4.6, le polyamide 6.9, le polyamide 6.10, le polyamides 6.36, le polyamide 6T, les mélanges comportant ces polyamides et les copolymères à base de ces polyamides.
Le matériau composite peut comprendre de 0,1% à 20% en poids de particules minérales submicroniques.

Outre les particules, le matériau composite peut comprendre d'autres additifs, tels que par exemple des stabilisants, plastifiants, ignifugeants, colorants, lubrifiants. Cette liste n'a aucun caractère limitatif. Les particules peuvent en outre être associées à d'autres additifs de renfort tels que des modificateurs de la résilience comme des élastomères éventuellement greffés, des renforts minéraux tels que les argiles, kaolin, des renforts fibreux tels que les fibres de verre, les fibres d'aramides, les fibres de carbone, les fibres de céramique.

Le matériau composite selon le premier objet de l'invention peut être obtenu par tous les procédés connus d'incorporation des particules dans un polymère thermoplastique. Un premier mode de réalisation consiste à incorporer les particules sous forme de poudre dans le polymère lors d'une opération d'extrusion. Un deuxième mode de réalisation consiste à incorporer les particules dans le polymère à l'aide d'un mélange maître, c'est à dire un composé comprenant une matrice thermoplastique et des particules en forte concentration. Le mélange maître est d'ailleurs aussi une composition selon l'invention.

Toutefois, un autre objet de l'invention, le second objet, réside dans un procédé de préparation de tels matériaux composites par addition des particules dans le milieu comprenant les monomères du polymère à préparer. Le polymère selon le second objet de l'invention est un polyamide.

Ce procédé s'applique particulièrement quand le polyamide est issu de la polycondensation d'une diamine et d'un diacide et que le milieu contenant les monomères est une solution aqueuse de sel de diamine et de diacide. En effet, l'addition de charges submicroniques dans un tel milieu provoque une floculation importante rendant impossible une telle addition.

Ainsi, dans les procédés actuels les charges sont incorporées en cours de polycondensation quand la majorité de l'eau et du sel a disparu.

Dans le but de limiter le phénomène de floculation décrit ci-dessus, le second objet de l'invention est un procédé de préparation d'un matériau composite comportant une matrice obtenue par polycondensation d'une diamine avec un acide dicarboxylique et des particules minérales submicroniques, caractérisé en ce qu'il comprend les étapes suivantes:
a) Introduction des particules, comportant un noyau et une couche au moins discontinue d'un oxyde, hydroxyde ou oxyde hydraté d'un métal, de point isoélectrique supérieur à celui du noyau, dans une solution aqueuse comprenant un sel de la diamine et de l'acide dicarboxylique.
b) Polycondensation du polyamide jusqu'à un degré de polymérisation désiré

Le noyau selon le second objet de l'invention est une particule de forme sensiblement sphérique ou plaquettaire. Il peut par exemple être constitué d'une silice plaquettaire. Le noyau est avantageusement à base d'un composé choisi parmi les oxydes de titane, d'aluminium, de zinc, de cuivre, les composés du sulfate de calcium, de strontium, de barium, le sulfure de zinc, les zéolites, le talc, le kaolin, la mullite, la silice.

Tout ce qui a été décrit précédemment à propos de la couche en surface pour les particules de silice selon le premier objet de l'invention s'applique ici à l'identique pour les particules selon le second objet de l'invention, quelle que soit la nature du noyau.

Les particules du second objet de l'invention sont de préférence sensiblement sphériques, le diamètre moyen de ces particules étant inférieur à 500 nm. Le diamètre moyen est de préférence inférieur à 200 nm, plus préférablement encore inférieur à 100 nm.

Pour la réalisation du matériau composite selon le second objet de l'invention, les particules peuvent être introduites sous forme de poudre ou de dispersion par exemple dans de l'eau. Elles sont de préférence introduites sous forme d'un sol, de préférence aqueux. Le sol peut contenir outre les particules des additifs destinés à le stabiliser et/ou des additifs destinés à entrer dans les compositions pour lesquelles les particules sont utilisées. A titre d'exemple de tels additifs, on peut citer les catalyseurs, les stabilisants à la lumière ou à la chaleur.

Le procédé du second objet de l'invention est particulièrement avantageux.

En effet, selon ce procédé, les particules ne floculent pas lorsqu'elle sont introduites dans le milieu aqueux contenant le sel.

Les matrices en polyamide selon le second objet de l'invention sont choisies parmi les produits de condensation d'une ou plusieurs diamines avec un ou plusieurs acides dicarboxyliques. Les diamines sont par exemple choisies parmi les diamines aliphatiques telles que l'hexamethylène diamine, la triméthylhexamethyléne diamine, la méthyl-2-pentaméthylène diamine. Les acides dicarboxyliques sont par exemple choisis parmi les acides dicarboxyliques à chaîne aliphatique tels que l'acide adipique, les acides dicarboxyliques aromatiques tels que l'acide téréphtalique, l'acide isophtalique, les acides dicarboxyliques arylaliphatiques, les dimères acides. A titres d'exemples de polyamides préférés on peut citer le polyamide 6.6, le polyamide 4.6, le polyamide 6.9, le polyamide 6.10, le polyamide 6.36, le polyamide 6T, les mélanges comportant ces polyamides et les copolymères à base de ces polyamides.
Le matériau composite selon le second objet de l'invention peut comprendre de 0,1% à 20% en poids de particules minérales submicroniques.

Outre les particules, le matériau composite selon le second objet de l'invention peut comprendre d'autres additifs, tels que par exemple des stabilisants, plastifiants, ignifugeants, colorants, lubrifiants. Cette liste n'a aucun caractère limitatif. Les particules peuvent en outre être associées à d'autres additifs de renfort tels que des modificateurs de la résilience comme des élastomères éventuellement greffés, des renforts minéraux tels que les argiles, kaolin, des renforts fibreux tels que les fibres de verre, les fibres d'aramides, les fibres de carbone, les fibres de céramique.

La polycondensation selon l'invention comprend les étapes d'évaporation de l'eau et de polycondensation en phase fondue. Elles sont réalisées selon les procédés usuels de fabrication du polyamide 66. La concentration en sel dans la solution aqueuse est généralement comprise entre 50 et 70%.

Les monomères pour l'obtention du polymère selon l'invention sont principalement un acide dicarboxylique et une diamine; introduits sous forme de sel, par exemple un adipate d'hexaméthylène diammonium. On peut utiliser en complément de ces monomères difonctionnels, des comonoméres monofonctionnels (limiteurs de chaînes), difonctionnels, ou multifonctionnels, avec un nombre de fonctions supérieur ou égal à trois. Un exemple de comonomère difonctionnel pouvant être utilisé est le caprolactame. L'utilisation d'un comonomère monofonctionnel peut être avantageuse afin de contrôler la cinétique de réaction de polycondensation et d'éviter éventuellement des phénomènes de prise en masse à l'intérieur du réacteur de polymérisation. A titre d'exemple de comonomère monofonctionnel convenable pour un tel contrôle, on peut citer les acides monocarboxyliques comme l'acide acétique.

Le matériau composite selon l'invention peut être mis en forme de granulés. Cette mise en forme consiste généralement à couler le matériau sous forme fondue à travers un orifice afin de former un jonc, à le refroidir, puis à former des granulés par coupe des joncs. La composition peut être toutefois directement alimentée dans des installations d'injection, moulage, filage pour la réalisation d'articles moulés ou de fils, fibres ou filaments.

Le matériau composite selon l'invention peut être utilisé pour la fabrication d'articles moulés, extrudés ou filés. Il peut par exemple être utilisé dans le domaine des plastiques techniques pour la réalisation de pièces destinées à être utilisées dans les secteurs du sport, de l'automobile, de l'électricité. Il peut être utilisé pour la fabrication de fils, fibres et filaments par filage en fondu. Les fils, fibres et filaments fabriqués à partir du matériau selon l'invention présentent une résistance à l'abrasion améliorée par rapport à des fils, fibres et filaments fabriqués à partir de compositions ne contenant pas de particules submicroniques.

Des exemples vont maintenant être donnés, uniquement à titre indicatif et pour illustrer l'invention.

### Exemple 1: Réalisation d'une dispersion de particules conformes à l'invention

### Matières premières utilisées:

KLEBOSOL® 30R50 (Sol de silice commercialisé par la société Hoechst)
Solution aqueuse d'oxychlorure de zirconium à 100 g/l en ZrO₂
Solution aqueuse de soude 4M.

### Conditions opératoires :

Dans un réacteur de 8 litres muni d'une agitation de type ancre tournant à 300 tours/mn on introduit 4000 g d'eau désionisée et 800 g de KLEBOSOL® 30R50. Le pH du milieu réactionnel est ajusté à 7,5 par ajout de quelques gouttes de la solution aqueuse d'oxychlorure de zirconium. La masse réactionnelle est chauffée jusqu'à 60°C, cette température est maintenue pendant toute la durée de la réaction. A 60°C, on ajoute de façon continue 240 ml de la solution aqueuse de ZrOCl₂ à 10%, le débit d'introduction est fixé à 2,5 ml/mn. Pendant l'introduction de l'oxychlorure de zirconium le pH est maintenu constant à l'aide d'une introduction simultanée de soude (solution 4 M). Après la fin d'introduction de la solution d'oxychlorure la température est maintenue à 60 °C pendant 1 heure. La conductivité du milieu réactionnel est de 11,6 mS. La masse réactionnelle est ensuite diafiltrée jusqu'à atteindre une conductivité de 1,5 mS (conductivité du perméat). On ajoute ensuite, à pH 7,5 et à 60 °C et de façon continue, 240 ml de la solution aqueuse de ZrOCl₂ à 10%, le débit d'introduction est de 2,5 ml/mn. Pendant l'introduction de l'oxychlorure de zirconium le pH est maintenu constant à l'aide d'une introduction simultanée de soude (solution 4 M). Après la fin d'introduction de la solution d'oxychlorure la température est maintenue à 60 °C pendant 1 heure. Le taux massique ZrO₂/SiO₂ est alors de 20%.

Après refroidissement, la masse réactionnelle est partiellement désionisée par diafiltration jusqu'à atteindre une conductivité de 1 mS. La dispersion est concentrée par ultrafiltration jusqu'à atteindre un extrait sec de 15%.

### Caractéristiques physico-chimiques des particules :

Extrait sec :14,95 % (poids constant à 100 °C)
pH : 7,5
Taille des particules mesurée au microscope électronique à balayage : 50 à 60 nm. L'analyse par microscopie à diffusion de lumière effectuée sur un appareil NICOMP montre que l'indice de polydispersité de la taille des particules est faible.
Point Isoélectrique : 6
Conductivité : <3 mS/cm².
L'observation par microscopie électronique à transmission met clairement en évidence la couche de dioxyde de zirconium sur la silice et l'absence de particules de zircone libres, non déposées sur la surface des particules de silice.

Test de stabilité en présence de sel N : on n'observe pas de floculation de la dispersion ainsi obtenue après dilution à 5 % et ajout de 150 % en poids de sel N (adipate d'hexaméthylammonium) par rapport au poids des particules dans la dispersion. La taille des particules déterminée par mesure NICOMP en présence du sel N est comprise entre 400 et 500 nm.

### Exemple comparatif 1: Particules non conformes à l'invention

On réalise une dilution à 5% d'un sol de silice KLEBOSOL 30R50 et on ajoute 150% en poids de sel N (sous la forme d'une solution à 25% massique en sel N) par rapport au poids des particules dans la dispersion. On observe une floculation immédiate.

### EXEMPLE 2 : Polymérisation en présence des particules de l'exemple 1 (polyamide 66)

### Conditions opératoires

Dans un réacteur agité de 300 ml on introduit 130 g de sel N sec, 83,4 g d'une suspension aqueuse de particules submicroniques réalisée selon l'exemple 1, 49,1 g d'eau, et 0,21 g d'acide acétique.
La composition de polyamide 6.6 comportant les particules est réalisée à partir de la solution précédente selon le mode opératoire suivant :
La solution est concentrée en sel N par évaporation de l'eau à pression atmosphérique jusqu'à ce que le rapport (masse sel N sec / (masse sel N sec + masse eau)) atteigne 0,7. L'évaporation est ensuite poursuivie à 17,5 bars jusqu'à ce que la température du mélange réactionnel atteigne 250°C. La pression est alors progressivement réduite de 17,5 bars absolus à 1 bar absolu et dans le même temps la température est élevée de 250°C à 275°C. La température est maintenue pendant 45 mn à 275°C puis le polymère est coulé et granulé.

Le polymère ainsi obtenu présente les caractéristiques suivantes :
Concentration pondérale des particules dans la composition : 10%
Indice de viscosité = 138 ml/g

L'indice de viscosité est mesuré à 25°C à l'aide d'un viscosimètre de type Ubbelohde pour une solution à 5 g/l de polymère dissous dans un mélange composé de 90% en poids d'acide formique et de 10% d'eau.

### Caractérisations

On réalise des coupes de 2 µm d'épaisseur et de 100 µm de côté et on les observe au microscope optique à contraste de phase. On observe très peu d'agglomérats. Le nombre d'agglomérats de taille supérieure à 10 µm est compris entre 0 et 3 par coupe.

On réalise des coupes d'environ 0,1 µm d'épaisseur. L'observation par microscopie électronique à transmission (MET) montre une dispersion très homogène : on observe des particules individuelles uniformément réparties avec quelques agrégats de taille environ inférieure à 500 nm.

### Comportement mécanique

Des tests de traction sont réalisés sur joncs extrudés préalablement conditionnés 3 jours à 50% d'humidité relative et à 23°C. Le diamètre des joncs est compris entre 0,5 et 1 mm. On utilise pour cela une machine de traction Erichsen 472 avec un capteur de force de capacité de 20 dan. On reporte la contrainte nominale (rapport de la force mesurée sur la section évaluée par mesure de diamètre avec palmer) en fonction de la déformation relative appliquée.
Le comportement de l'échantillon contenant les nanoparticules est très voisin de celui d'un polymère polyamide 66 pur : l'allongement à la rupture est supérieur à 100% et la contrainte au seuil d'écoulement est voisine de 50 MPa.

## Revendications

1. Procédé de préparation d'un matériau composite comportant une matrice polyamide obtenue par polycondensation d'une diamine avec un acide dicarboxylique et des particules minérales submicroniques, **caractérisé en ce qu'**il comprend les étapes suivantes:
a) Introduction des particules, comportant un noyau et une couche au moins discontinue d'un oxyde, hydroxyde ou oxyde hydraté d'un métal, de point isoélectrique supérieur à celui du noyau, dans une solution aqueuse comprenant un sel de la diamine et de l'acide dicarboxylique
b) Polycondensation du polyamide jusqu'à un degré de polymérisation désiré

2. Procédé selon la revendication 1, **caractérisé en ce que** le matériau composite comporte entre 0,1 et 20 % en poids de particules.

3. Procédé selon la revendication 1 ou 2 **caractérisé en ce que** les particules minérales sont sensiblement sphériques, de diamètre inférieur à 500 nm.

4. Procédé selon la revendication 3, **caractérisé en ce que** les particules minérales sont sensiblement sphériques, de diamètre inférieur à 200 nm.

5. Procédé selon l'une des revendications précédentes, **caractérisé en ce que** la diamine est l'hexaméthylène diamine.

6. Procédé selon l'une des revendications précédentes, **caractérisé en ce que** l'acide dicarboxylique est l'acide adipique.

7. Procédé selon l'une des revendications précédentes, **caractérisé en ce que** la couche de la particule est formée par un oxyde, hydroxyde ou oxyde hydraté de zirconium:

8. Procédé selon l'une des revendications précédentes, **caractérisé en ce que** les particules sont introduites sous forme de sol dans la solution aqueuse comprenant le sel de diamine et d'acide dicarboxylique.

9. Procédé selon la revendication 8 **caractérisé en ce que** le sol est un sol aqueux.

10. Matériau composite obtenu par le procédé selon l'une des revendications 1 à 9.

11. Matériau composite comportant une matrice à base de polyamide et des particules minérales submicroniques, **caractérisé en ce que** le polyamide est obtenu par polycondensation d'une diamine avec un acide dicarboxylique, et **en ce que** les particules comportent un noyau à base de silice et une couche au moins discontinue d'un oxyde, hydroxyde ou oxyde hydraté d'un métal, de point isoélectrique supérieur à celui du noyau.

12. Matériau selon la revendication 11 **caractérisé en ce qu'**il comporte entre 0,1 et 20 % en poids de particules.

13. Matériau selon l'une des revendications 11 ou 12 **caractérisé en ce que** les particules minérales sont sensiblement sphériques, de diamètre inférieur à 500 nm.

14. Matériau selon la revendication 13 **caractérisé en ce que** les particules minérales sont sensiblement sphériques, de diamètre inférieur à 200 nm.

15. Matériau selon l'une des revendications 11 à 14, **caractérisé en ce que** la diamine est l'hexaméthylène diamine.

16. Matériau selon l'une des revendications 11 à 15, **caractérisé en ce que** l'acide dicarboxylique est l'acide adipique.

17. Matériau selon l'une des revendications 11 à 16, **caractérisé en ce que** la couche de la particule est formée par un oxyde, hydroxyde ou oxyde hydraté de zirconium.

18. Article moulé obtenu à partir d'un matériau préparé par le procédé selon l'une des revendications 1 à 9 ou à partir d'un matériau selon l'une des revendications 10 à 17.

19. Fils fibres et filaments obtenus par filage d'un matériau préparé par le procédé selon l'une des revendications 1 à 9 ou d'un matériau selon l'une des revendications 10 à 17.

20. Particules minérales submicroniques à base de silice, ces particules comportant un noyau à base de silice et une couche au moins discontinue d'un oxyde, hydroxyde ou oxyde hydraté de zirconium, **caractérisées en ce qu'**elles sont sensiblement sphériques, leur diamètre moyen étant inférieur à 500 nm, et **en ce que** la proportion en poids de la couche par rapport à la masse totale de la particule est comprise entre 15 et 25 %.

## Patentansprüche

1. Verfahren zur Herstellung eines Verbundstoffs, welcher eine Polyamidmatrix, die durch Polykondensation eines Diamins mit einer Dicarbonsäure erhalten wird, und Mineralteilchen im Submikrometerbereich aufweist, **dadurch gekennzeichnet, dass** es die folgenden Schritte aufweist:
a) Einführen der Teilchen, welche einen Kern aufweisen sowie eine wenigstens unterbrochene Schicht eines Oxids, Hydroxids oder hydratisierten Oxids eines Metalls, mit isoelektrischem Punkt, der größer ist als der des Kerns, in eine wässrige Lösung, die ein Salz des Diamins und der Dicarbonsäure aufweist
b) Polykondensation des Polyamids bis zu einem gewünschten Grad der Polymerisation

2. Verfahren gemäß Anspruch 1, **dadurch gekennzeichnet, dass** der Verbundstoff zwischen 0,1 und 20 Gew.-% an Teilchen aufweist.

3. Verfahren gemäß Anspruch 1 oder 2, **dadurch gekennzeichnet, dass** die Mineralteilchen im wesentlichen kugelförmig sind, mit einem Durchmesser kleiner als 500 nm.

4. Verfahren gemäß Anspruch 3, **dadurch gekennzeichnet, dass** die Mineralteilchen im wesentlichen kugelförmig sind, mit einem Durchmesser kleiner als 200 nm.

5. Verfahren gemäß einem der vorausgegangenen Ansprüche, **dadurch gekennzeichnet, dass** das Diamin Hexamethylendiamin ist.

6. Verfahren gemäß einem der vorausgegangenen Ansprüche, **dadurch gekennzeichnet, dass** die Dicarbonsäure Adipinsäure ist.

7. Verfahren gemäß einem der vorausgegangenen Ansprüche, **dadurch gekennzeichnet, dass** die Partikelschicht gebildet ist aus einem Oxid, Hydroxid oder hydratisiertem Oxid von Zirkonium.

8. Verfahren gemäß einem der vorausgegangenen Ansprüche, **dadurch gekennzeichnet, dass** die Teilchen in Form von Sol in die wässrige Lösung eingeführt werden, welche das Salz des Diamins und der Dicarbonsäure aufweist.

9. Verfahren gemäß Anspruch 8, **dadurch gekennzeichnet, dass** das Sol ein wässriges Sol ist.

10. Verbundstoff, welcher durch ein Verfahren gemäß einem der Ansprüche 1 bis 9 erhalten wird.

11. Verbundstoff, welcher eine Matrix auf Basis von Polyamid und von Mineralteilchen im Submikrometerbereich aufweist, **dadurch gekennzeichnet, dass** das Polyamid durch Polykondensation eines Diamins mit einer Dicarbonsäure erhalten wird, und dadurch, dass die Teilchen einen Kern auf Basis von Kieselerde aufweisen sowie eine wenigstens unterbrochene Schicht eines Oxids, Hydroxids oder hydratisierten Oxid eines Metalls, mit einem isoelektrischen Punkt, der größer ist als der des Kerns.

12. Material gemäß Anspruch 11, **dadurch gekennzeichnet, dass** es zwischen 0,1 und 20 Gew.-% an Teilchen aufweist.

13. Material gemäß einem der Ansprüche 11 oder 12, **dadurch gekennzeichnet, dass** die Mineralteilchen im wesentlichen kugelförmig sind, mit einem Durchmesser kleiner als 500 nm.

14. Material gemäß einem der Ansprüche 11 oder 12, **dadurch gekennzeichnet, dass** die Mineralteilchen im wesentlichen kugelförmig sind, mit einem Durchmesser kleiner als 200 nm.

15. Material gemäß einem der Ansprüche 11 bis 14, **dadurch gekennzeichnet, dass** das Diamin Hexamethylendiamin ist.

16. Material gemäß einem der Ansprüche 11 bis 15, **dadurch gekennzeichnet, dass** die Dicarbonsäure Adipinsäure ist.

17. Material gemäß einem der Ansprüche 11 bis 16, **dadurch gekennzeichnet, dass** die Partikelschicht gebildet ist aus einem Oxid, Hydroxid oder hydratisiertem Oxid von Zirkonium.

18. Geformter Artikel, welcher aus einem Material erhalten wird, das nach einem Verfahren gemäß einem der Ansprüche 1 bis 9 zubereitet wurde, oder aus einem Material gemäß einem der Ansprüche 10 bis 17.

19. Fasern oder Fäden, die erhalten werden durch Spinnen eines Materials, welches durch das Verfahren gemäß einem der Ansprüche 1 bis 9 hergestellt wurde, oder eines Materials gemäß einem der Ansprüche 10 bis 17.

20. Mineralteilchen im Submikrometerbereich auf Basis von Kieselerde, wobei diese Teilchen einen Kern auf Basis von Kieselerde und eine wenigstens unterbrochene Schicht eines Oxids, Hydroxids oder hydratisierten Oxids aus Zirkonium aufweisen, **dadurch gekennzeichnet, dass** sie im wesentlichen kugelförmig sind, wobei ihr mittlerer Durchmesser kleiner als 500 nm ist, und dadurch, dass das Gewichtsverhältnis der Schicht in Bezug auf die Gesamtmasse des Teilchens zwischen 15 und 25 % liegt.

## Claims

1. Process for preparing a composite material comprising a polyamide matrix obtained by polycondensation of a diamine with a dicarboxylic acid and mineral submicron particles, **characterized in that** it comprises the following steps:
a) introduction of the particles, comprising a core and an at least discontinuous layer of an oxide, hydroxide or hydrated oxide of a metal, whose isoelectric point is higher than that of the core, into an aqueous solution comprising a salt of the diamine and of the dicarboxylic acid,
b) polycondensation of the polyamide to the desired degree of polymerization.

2. Process according to claim 1, **characterized in that** the composite material comprises between 0.1% and 20% by weight of particles.

3. Process according to claim 1 or 2, **characterized in that** the mineral particles are substantially spherical, with a diameter of less than 500 nm.

4. Process according to claim 3, **characterized in that** the mineral particles are substantially spherical, with a diameter of less than 200 nm.

5. Process according to one of the preceding claims, **characterized in that** the diamine is hexamethylenediamine.

6. Process according to one of the preceding claims, **characterized in that** the dicarboxylic acid is adipic acid.

7. Process according to one of the preceding claims, **characterized in that** the layer on the particle is formed from an oxide, hydroxide or hydrated oxide of zirconium.

8. Process according to one of the preceding claims, **characterized in that** the particles are introduced in the form of a sol into the aqueous solution comprising the salt of diamine and of dicarboxylic acid.

9. Process according to claim 8, **characterized in that** the sol is an aqueous sol.

10. Composite material obtained by the process according to one of claims 1 to 9.

11. Composite material comprising a matrix based on polyamide and on mineral submicron particles, **characterized in that** the polyamide is obtained by polycondensation of a diamine with a dicarboxylic acid, and **in that** the particles comprise a silica-based core and an at least discontinuous layer of an oxide, hydroxide or hydrated oxide of a metal, whose isoelectric point is greater than that of the core.

12. Material according to claim 11, **characterized in that** it comprises between 0.1% and 20% by weight of particles.

13. Material according to either of claims 11 and 12, **characterized in that** the mineral particles are substantially spherical, with a diameter of less than 500 nm.

14. Material according to claim 13, **characterized in that** the mineral particles are substantially spherical, with a diameter of less than 200 nm.

15. Material according to one of claims 11 to 14, **characterized in that** the diamine is hexamethylenediamine.

16. Material according to one of claims 11 to 15, **characterized in that** the dicarboxylic acid is adipic acid.

17. Material according to one of claims 11 to 16, **characterized in that** the layer on the particle is formed from an oxide, hydroxide or hydrated oxide of zirconium.

18. Moulded article obtained from a material prepared by the process according to one of claims 1 to 9 or from a material according to one of claims 10 to 17.

19. Yarns, fibres and filaments obtained by spinning a material prepared by the process according to one of claims 1 to 9 or from a material according to one of claims 10 to 17.

20. Silica-based mineral submicron particles, these particles comprising a silica-based core and an at least discontinuous layer of an oxide, hydroxide or hydrated oxide of zirconium, **characterized in that** they are substantially spherical, with a mean diameter of less than 500 nm, and **in that** the weight proportion of the layer relative to the total mass of the particle is between 15% and 25%.
